# EUROPEAN PATENT SPECIFICATION

(11) **EP 2 387 510 B1**
(45) Date of publication and mention of the grant of the patent: **14.08.2013**
(21) Application number: 09736275.0
(22) Date of filing: 15.01.2009
(51) Int. Cl.: B60K 1/02, B60K 6/10, B60K 6/365, B60K 6/48, B60K 6/30

(54) **POWERTRAIN COMPRISING AN OPTIMIZED ENERGY RECOVERY SYSTEM**
ANTRIEBSSTRANG MIT EINEM OPTIMIERTEN ENERGIERÜCKGEWINNUNGSSYSTEM
GROUPE MOTOPROPULSEUR COMPORTANT UN SYSTÈME OPTIMALISÉ DE RÉCUPÉRATION D'ÉNERGIE

(43) Date of publication of application: 23.11.2011
(73) Proprietor: Renault Trucks, 69800 Saint Priest (FR)
(72) Inventor: SARTRE, Vincent, F-69500 Bron (FR); JUSTIN, Thomas, F-69530 Brignais (FR)
(74) Representative: Putet, Gilles
(86) International application number: PCT/IB2009/000247
(87) International publication number: WO 2010/082079

(56) References cited:
- WO-A2-2006/043812
- WO-A2-2007/138353
- DE-A1- 3 204 803
- DE-A1- 19 909 424
- JP-A- 2004 042 760
- US-A- 5 024 633

## Description

### Technical field

The invention relates to a powertrain equipped with an optimized energy recovery system comprising a flywheel.

### Background art

The reduction of the fuel consumption is a major stake for the sustainability of many industries, but most important for the automotive industry and the machinery industry. A huge majority of vehicles (trucks, buses, passenger cars, etc..) is fitted with a powertrain comprising an internal combustion engine (ICE) which drives the driving wheels through a transmission set (including for example a clutch or a torque converter, a manual, automated or automatic gearbox, a differential, an axle) and on another part the auxiliaries that are necessary to operate the vehicle systems. These auxiliaries are fed by electrical, hydraulic or pneumatic networks, which in each case derive their energy from the engine. In the case of commercial vehicles, the engine is most often a turbo-charged diesel engine. Similar powertrains are used to power all sorts of machines, including construction equipment machines.

When analyzing the balance of energy used to operate a vehicle, there are non reducible energy demands due to the drag and rolling forces that are intrinsic characteristics of the vehicle, and due to the auxiliaries power requirements. Those being put apart, an amount of the energy which is used to drive the vehicle is wasted in the brakes, coming from potential energy kinetic energy (resulting from the energy provided to the vehicle when accelerating), and potential energy (resulting from energy provided to the vehicle during hill climbing).

Some well known technologies can limit a fraction of these losses. For example, hybrid drivelines are a known technology to achieve braking energy recovery.

A first of these technologies comprises hybrid powertrains which equip the now well-known Hybrid Electric Vehicles (HEVs), most often fitted with electro-chemical storages. On a general level, HEVs consist of a powertrain associating an ICE with at least one electric machine and, most often, with at least one storage device (batteries, super capacities, inertia wheels...). Such a system can store an amount of the braking energy in the storage device by using the electric machine as a generator and then, at an appropriate time, redirect this energy to the driveline using the electric machine as a motor to participate to the propulsion of the vehicle. Also known are hybrid hydraulic or pneumatic vehicles where the electrical components are replaced by fluidic counterparts.

One interesting layout for a hybrid electric vehicle is the so-called parallel hybrid layout where the transmission set of the vehicle is mechanically coupled (directly or through gearings, belts) in parallel to both the ICE crankshaft and to the electrical machine. During decelerations, the electric machine is used as a generator to slow down the vehicle and the electricity that is produced is stored in batteries or in ultra-capacitors. During accelerations, the electric machine is used as a motor and adds its torque to that of the ICE, or even replaces the torque of the ICE.

Hybrid powertrains are also known in the field of construction equipment machinery.

As a variant, it is also know to have hybrid powertrains with electro-mechanical storage means. Instead of batteries or in addition thereto, an electro-mechanical device can be used where the energy is stored in kinetic form, for example in a spinning wheel also called a flywheel. In this context, the flywheel is a dedicated energy accumulating flywheel which is not to be confused with the ICE flywheel, the sole purpose of which is to smoothen the rotation of the engine. An energy accumulating flywheel needs to store a significant amount of energy which can be enough to drive the vehicle, at least as a complement to the ICE.

In a known layout, the flywheel is mechanically linked to a first electric machine, the purpose of which is to speed up or slow down the flywheel in order to increase or decrease its kinetic energy and transform it into electricity. In a parallel HEV, the electric energy derived from the flywheel can then be used in a second electrical machine to drive the vehicle in addition to the ICE. The second electrical machine is also used as a generator, during deceleration, to provide the first machine with the electricity to drive the flywheel.

Compared to electrochemical batteries, flywheels are likely to be an economic alternative when:
- rapid discharge and recharge are necessary;
- long life cycle is necessary;
- weight or volume is constrained;
- use of toxic or explosive materials is unfeasible; and/or
- environmental control is difficult.

When high energy capacities are needed, flywheels must rotate at high speeds with safety issues (risk of burst of the flywheel due to inertia forces) and technological issues (such as issues with the bearing). In the above described layout of a hybrid powertrain equipped with a flywheel, the two electrical machines need to be rated to the maximal power to be recovered. Moreover, in such a layout, all the energy recovered by the system has to be first transformed from mechanical form to electrical form, then from electrical form to mechanical form to be stored in the flywheel, and again from mechanical form to electrical form, then from electrical form to mechanical form to be used as driving power. Although electric machines have inherently good efficiency ratios, these numerous transformations necessarily lead to energy losses.

Document US-2007/0049443 discloses another type of layout for a vehicle equipped with an energy recovery system. The layout is based on a conventional ICE driveline with an ICE, a torque converter with a lock clutch, an automatic gearbox and a transmission shaft which is coupled to the final drive. On this base, an energy accumulating flywheel is coupled to the output shaft of the gearbox through a three-way power split transmission device comprising three input/output couplings, a first of which is coupled to the flywheel, a second of which is coupled to a first electrical machine and the third of which is coupled to the transmission shaft of the gearbox. The three way power split transmission is embodied as a planetary gear. The system further comprises a second electrical machine which is directly coupled with the engine output shaft. Essentially, the first electrical machine and the planetary gear form a continuously variable transmission between the flywheel and the transmission shaft, said transmission being electrically controlled by the first electrical machine.

Compared to the above described conventional layout, the layout of document US-2007/0049443 is more favorable because part of the energy recovered through the flywheel is transferred purely mechanically, that is with a high efficiency ratio. Nevertheless, this layout has some drawbacks. As can be seen from the graph of Figure 2 in document US-2007/0049443, during acceleration or deceleration of the vehicle, the speed of the flywheel (which corresponds to its "state of charge") is heavily dependant on the vehicle speed. To keep the flywheel at a certain speed, or to bring it to that speed, the first electrical machine is constantly operated within an extended range of speeds. Only for one defined vehicle speed is the first electrical machine at rest, at which moment the recovered energy is transferred entirely mechanically. For whatever other speed, part of the energy is transferred electrically, and the more the vehicle speed is different from the defined speed, the more important the electrical part. This layout, with the three way power split transmission on the transmission output shaft, also leads to relatively big torque values being transferred trough the recovery system, which therefore need be dimensioned consequently.

The document US 5, 024, 633, wich is the closest prior art, discloses a hydromechanical transmission with an energy storage flywheel comprising engine input means; flywheel input means; hydrostatic transmission means with a pump and a motor.

It is one object of the invention to provide a new layout for a powertrain equipped with an optimized energy recovery system comprising a flywheel, so that the size of the system can be reduced, so that it can be better integrated on a vehicle or a machine, and so that it can have a better efficiency ratio.

### Summary

In order to fulfill the above mention objectives, one embodiment of the invention provides for a powertrain for a vehicle comprising:
- a thermal engine for driving a driveline of the vehicle;
- a power split transmission device comprising at least three separate input/output couplings, the speed of all said at least three separate couplings being interdependent but not being with a fixed ratio one to the other;
wherein:
- a first coupling of said power split transmission device is coupled to a flywheel and to a first fluidic or electric machine ;
- a second coupling of said power split transmission device is coupled to the driveline of the vehicle ;
- a third input/output coupling of the power split transmission device is coupled to a friction brake adapted to control the torque applied on said third coupling and said third coupling is not connected to an electric machine;
characterized in that
- the friction brake is controlled to create a controlled amount of friction, including at least one intermediate value of friction between and distinct from a no friction state and a full friction state in order to have at least part of the energy provided by the flywheel that is sent to the driveline of the vehicle or in order to force the power split transmission device to send some power through its first coupling to the flywheel.

### Description of figures

The invention will be best understood from the following detailed description which refers to the appended drawings in which:
- Figure 1 is a schematic functional diagram of a first embodiment of the invention;
- Figures 2 and 3 are figures similar to Figure 1, showing respectively a second and a third embodiment of the invention.
- Figure 4 is lever diagram showing the speed relationship which links the three input/output couplings in a planetary gear;
- Figures 5a and 5b are respectively a lever diagram and a functional diagram showing the respective speeds and power flows for a specific use configuration in which the flywheel can be charged;
- Figures 6 and 6b are respectively a lever diagram and a functional diagram showing the respective speeds and power flows for another use configuration in which the flywheel can be discharged; and
- Figures 7 to 11 are each a schematic view of possible structural implementations of the second embodiment of Figure 2;
- Figures 12a, 12b, and 13a, 13b are similar to Figures 5a, 5b described above, but in relation to the second functional embodiment;
- Figures 14a, 14b, 15a, 15b, and 16a, 16b are similar to Figures 5a, 5b described above, but in relation to the third functional embodiment;
- Figures 17a, 17b, and 18a, 18b are similar to Figures 6a, 6b described above, but in relation to the third functional embodiment.

### Description of the invention

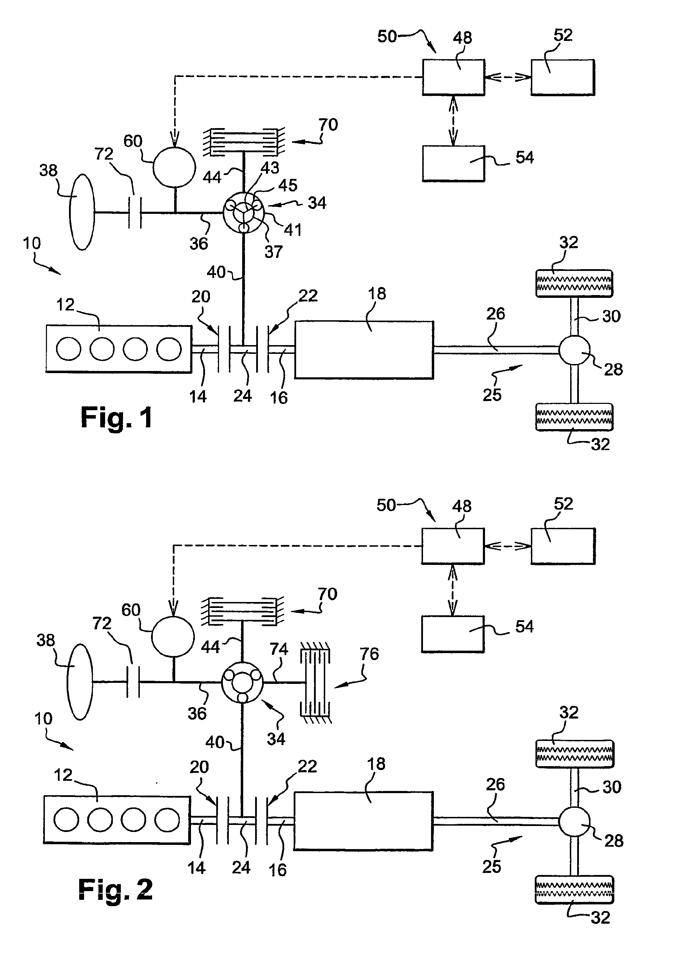

On Figure 1 are shown the main elements of a first functional embodiment of a powertrain 10 according to the invention, this powertrain being incorporated in a vehicle for its propulsion.

Nevertheless, it is to be noted that the powertrain according to the invention could also be used in other contexts, such as in the field of construction equipment machinery, including loaders, excavators, etc. In such a case, the driven unit would not be (or not only be) a vehicle axle, but could also be a hydraulic pump for a hydraulic power circuit.

The powertrain 10 comprises first of all an engine 12. Although the invention could be implemented within a powertrain where the engine is an electrical engine, it will be hereunder more specifically considered the case where the engine is an internal combustion engine. For commercial vehicles, especially trucks and buses, the engine can be a turbocharged diesel piston engine. The engine 12 has an output shaft 14 which is coupled to the input shaft 16 of a variable ratio transmission device 18 which, in the example shown, is a conventional discrete ratio mechanical gearbox. This mechanical gearbox could be automated, that is where the gear selection is not done manually but through actuators. The gearbox could also be a discrete ratio automatic gearbox. In special cases, one could implement the variable ratio transmission device as a continuously variable transmission (CVT).

In the example shown, the engine output shaft 14 is coupled to the gearbox input shaft 16 through a first clutch 20 and a second clutch 22, the two clutches being coupled by an intermediate shaft 24. In certain cases, such as if the gearbox has a neutral position, one of these two clutches could be dispensed with. In such a case, the intermediate shaft 24 will simply be unitary with either the engine output shaft 14 or the gearbox input shaft 16, depending on which clutch remains. In the case of an automatic gearbox, at least one of the clutches could be replaced by a torque converter. It is to be noted that the gearbox could be a twin-clutch gearbox.

The gearbox 18 has an output shaft which is coupled to a driven unit 25 comprising for example a propeller shaft 26, a differential 28, and two drive shafts 30 driving the two wheels 32 of a drive axle. The driven unit could be different, depending on the vehicle, for example with several driven axles.

The above mentioned components, including the engine 12, the clutch(es) 20, 22, the gearbox 18 and the driven unit 25 can be considered, in this embodiment, as forming the main driveline of the powertrain.

According to one feature of the invention, the powertrain 10 is equipped with an energy recovery system which includes a mechanical power split transmission device 34 comprising at least three input/output couplings. More precisely, the rotating speeds of all said at least three separate couplings are interdependent but do not have a fixed ratio one to the other.

A conventional differential is such a type of device, but, in the first functional example shown on Figure 1, this device is implemented as a planetary gear 34. Such a gear comprises a sun wheel 37, a ring wheel 41 coaxial with the sun gear 37, and a carrier 43 which is coaxial with the sun and ring wheels, where the sun wheel, the ring wheel and the carrier are rotatable one to the other around their common axis, and where said carrier 43 carries rotatable satellite wheels 45 which are meshed with both the sun wheel 37 and the ring wheel 41. Each of the sun wheel, of the ring wheel and of the satellite carrier can be considered as one input/output of the planetary gear. In such a gear, the speed of the three inputs/outputs are linked one to the other in a way which will be explained further. Basically, the speed of one of the input/outputs is a linear combination of the speeds of the other two input/outputs.

According to one embodiment of the invention, a first input/output coupling 36 of the three way power split transmission device 34 is mechanically coupled to a flywheel 38 and is coupled also to a fluidic or electric machine 60. A second input/output 40 is mechanically coupled to the driveline, in this embodiment to the engine 12 and to the input shaft of the gearbox 18, and a third input/output coupling 44 is mechanically coupled to a friction brake 70 adapted to control the torque applied on said third coupling and said third coupling is not connected to an electric or hydraulic machine. The energy recovery system can be said to include essentially the planetary gear 34, the flywheel 38, the fluidic or electric machine 60, and the friction brake 70.

The machine 60 is able to transform the rotating movement of the first coupling into another form of energy. It can be an electrical generator, a hydraulic pump, a compressor, etc...

This energy can be used as such by a final energy consumer of the vehicle. Such would be the case if the machine is the compressor of a refrigerating system (for refrigerating the passenger compartment of a vehicle, or the cargo area of a refrigerated truck for example), the air compressor of a vehicle equipped with air-pressure driven systems (such as air brakes, or air suspensions), the hydraulic steering pump, etc...

Conversely, this energy can also be used as a form of non-mechanical transmission. For example, the machine can an electrical generator connected (directly or indirectly) to at least one electric motor, a hydraulic pump connected to at least one hydraulic motor, a compressor connected to at least one pneumatic cylinder, etc... The electric or hydraulic motor(s) or the pneumatic cylinder(s) can then in turn control the movement of an accessory of the vehicle, such accessory being then for example the compressor of a refrigerating system, the air compressor or the hydraulic steering pump as stated above.

The machine 60 can be a reversible machine, such as an electrical motor/generator or a hydraulic motor/pump, or a non-reversible machine such a simple electrical generator or hydraulic pump

Although not compulsory, the system can be provided with a corresponding energy accumulator, such as electro-chemical batteries, ultra-capacitors, fluidic pressure accumulators, heat accumulators, etc... where the energy provided by the machine 60 can be stored.

It is to be noted that, in the case of a three-way power split device under the form of a planetary gear, the invention can be implemented with whichever of the sun wheel, the ring wheel or the planet carrier being the first, second or third input/output of the power split device. Nevertheless, at least for a commercial vehicle powertrain, in view of the relative optimum speeds of the flywheel and of the driveline, a favorable layout can be achieved with the flywheel coupled to the sun wheel of the planetary gear. The driveline can then be coupled to the satellite carrier and the friction brake can be coupled to the ring wheel, as in the case which will be discussed below, or inversely.

As can be seen on Figure 1, the power split device 34 is mechanically coupled to the intermediate shaft 24 which extends between the two clutches. Therefore, when the first clutch 20 is engaged, the power split device is directly coupled (possibly through a transmission device) to the engine output shaft 14, and, when the second clutch 22 is engaged, it is directly coupled to the gearbox input shaft 16. In other words, if one considers the general case of power flowing downstream along the main driveline from the engine 12 to the vehicle wheels 32, the power split device 34 is mechanically coupled to that main driveline upstream of the variable ratio transmission device 18.

As said above, the flywheel 38 is an energy accumulating flywheel which is not to be confused with the engine flywheel. Indeed, at least in the case of an internal combustion piston engine, the engine comprises its own conventional flywheel (not shown on the figures) which is dedicated to achieving a smooth engine rotation, despite of the inherently discontinuous operation of a piston engine. Calculations have shown that, for a powertrain dedicated to a medium size truck, it would be desirable for the energy accumulating flywheel to be able to store energy in the order of 50 to 300 Watt x hours, or more. In any case, in a powertrain for a vehicle, the flywheel 38 according to the invention shall be able to store at least 25 Watt x hours at its maximal nominal speed. Further calculations have shown that this could be achieved with a steel disc having a diameter of less than 500 mm, weighing approximately 50 to 150 kilograms, and being rotatable up to a speed of 4500 to 9000 rpms. Such a flywheel would have an axial thickness approximately within a range of 30 to 100 mm and a moment of inertia approximately within a range of 1500 to 5000 kilogram x m². The flywheel could also be a high speed flywheel, such as a composite flywheel having a diameter and a maximum rotation speed such that its peripheral speed can reach the magnitude of 1000 meters per second. Such flywheels are generally tubular and operate in an enclosure under vacuum. In any case, the energy accumulating flywheel 38 can be differentiated from the engine flywheel by the fact that its rotating speed is not directly a linear function of only the rotating speed of the engine 12.

According to the invention, the machine 60 can be either electric or fluidic. In the following description of one embodiment of the invention, it will be assumed that the machine 60 is a reversible electric machine which is connected to an electric storage unit 52. In such a case, the electrical machine 60 is electrically connected to a power control unit 48, the aim of which is to manage the electrical energy in the electric machine 60. The power control unit 48 is electrically connected to an electric network 50 which has a storage unit 52 (in the form of batteries, super capacities, etc..), and may also comprise electrical auxiliaries 54, such as electrically driven compressors for refrigerating units, electrically driven hydraulic pumps, etc... As will be described hereunder, the electric network 50 may also comprise other electrical loads, for example electric machines which are directly or indirectly mechanically coupled to one of the inputs/outputs of the power split device 34 or to the driveline. The electric network can also comprise a resistor (which can be equipped with a cooling system) to dissipate excess electric energy produced by the first electrical machine in certain operating modes where the electric storage unit 52 is full and where the other electric consumers cannot use all the produced electricity.

One or several electronic controller unit(s) (not shown) manage(s) all the components in order to make them operate properly as wanted.

In the case where the electrical machine 60 is reversible, it can operate both as a motor or as a generator. The electrical machine 60 will thus be able to provide the first input/output coupling 36 of the power split device 34 a torque, either resistive or driving. Therefore it will either draw electric current from the electrical network or provide electrical current to the network.

In the embodiment of Figure 1, it can be seen that the flywheel 38 and the machine 60 which are connected to the first coupling 36 have a fixed speed ratio one to the other. They can be either directly connected, i.e. they can rotate at the same speed, or be connected through a transmission, for example through two meshed wheels forming a reduction gear, a further planetary gear used as a reduction gear, a belt and pulley transmission, etc.... Preferably, these transmission devices are mechanical devices giving a constant ratio of angular speeds between input and output.

Each of the flywheel 38, the friction brake 70 and the engine 12 can be coupled to the corresponding input/output of the power split device 34 through a transmission as defined above.

In some cases, such as where the machine 60 is the compressor of a refrigerating system, the air compressor or the hydraulic steering pump as stated above, the machine 60 could be connected to the flywheel 38 and/or to the first input/output coupling 36 through a variable speed transmission device, for example a gearbox or a continuously variable transmission.

As shown on figure 1, the flywheel 38 can be connected to the first coupling via a clutch 72, and, in such a case, the machine 60 can be coupled either to the power split transmission side of the clutch 72 or to the flywheel side of the clutch 72. That clutch 72 could be a dog clutch with a synchronizer.

If reversible, the machine 60 can draw current from the electrical storage unit 52 to speed up the flywheel 38. Conversely, the machine can also be operated as a generator and provide current to be stored in the electrical storage unit 52 when it operates as a motor drawing its energy from the flywheel 38 and/or from the driveline through the power split transmission 34. The machine 60 allows a transfer of energy between the flywheel and the batteries in order to manage the state of charge (SOC) of both of them independently.

As can be seen on Figure 1, the friction brake 70 is provided to act on the third input/output 44 of the power split device 34. Such a brake can be of any type. It will be used to provide a resistive torque to the power split unit. It can therefore comprise a rotor connected to the third/input output and a stator connected to a part which can be considered as static with respect to the vehicle, or at least with respect to the power split unit. The brake can be controlled to create a controlled amount of friction between its rotor and its stator, including at least one intermediate value of friction between and distinct from a no friction state and a full friction state. In the no friction state, the third coupling is free to rotate, while in the full friction state, it is kept at standstill. For an intermediate value of friction, and when at least one of the other couplings is rotating under the action of a driving torque, the brake will allow a controlled slippage between its rotor and its stator so that the third coupling is allowed to rotate but so that the brake provides a resistive torque on the third input/output coupling. By controlling the amount of torque so applied on the third input/output coupling, it is possible to control the torques on the other input/output couplings. In any case, the brake 70 cannot be a mere clutch which only has two nominal configurations, fully engaged and fully disengaged, and only a transient configuration where a sliding motion is created between its two parts.

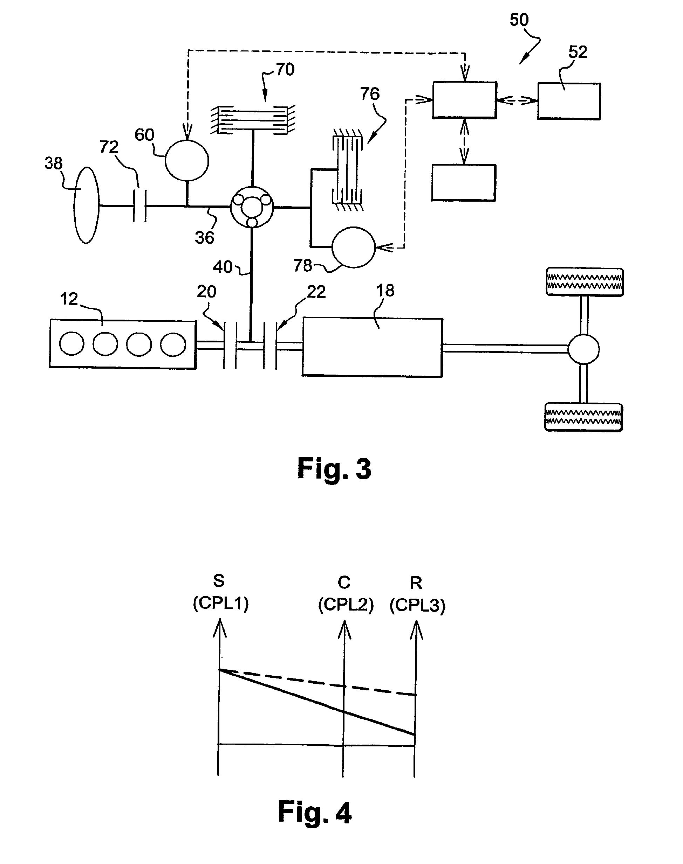

The powertrain 10 according to this first embodiment of the invention has different operating modes, some of which are described below, with reference to figures 4 to 6b

Figures 4, 5a, 6a, are based on the conventional lever diagram of a planetary gear from which the speed of each input/output as well as the torque upon it can be graphically derived. In the example shown, it is recalled that the sun wheel 37 is coupled to the flywheel 38 through the first input/output coupling 37, the carrier 43 is coupled to the engine 12 through the second coupling and the ring wheel 41 is coupled to the brake 70 through the third coupling. On such a lever diagram the three vertical axis CPL1, CPL2, CPL3 represent respectively the rotating speed axis for the first, second and third input couplings with respect to the value 0 represented by the horizontal axis. Of course, the speed can be positive or negative depending on the rotation direction of each of these components. Especially, the ring wheel and the sun gear can rotate in the same direction or in opposite directions depending on the rotation speed of the carrier. In such a diagram, the axis CPL1, CPL2, CPL3 are spaced apart so that the ratio of distance between axis CPL1 and CPL2 to the distance between axis CPL2 and CPL3 is proportional the ratio of the diameter of the ring wheel to the diameter of the sun wheel. In such a case, the rotation speeds of the three components are interrelated so that their representative locations on their respective axis are aligned. In other words, with such a diagram, it is possible to know the speed of one component by knowing the speed of the other two components. Also, the torques acting on each of said coupling can be represented on the corresponding axis and the corresponding equilibrium on the "lever" joining the speed locations determines the speed variation of each coupling.

On Figure 4 is shown the case where, from an initial state of operation, shown as a solid line, no torque is provided by brake 70 on the second coupling. It is recalled that, in a planetary gear 34, the torques applied on the three inputs/outputs are by nature balanced as on a lever. In such a case, any increase in the speed of the second coupling (i.e. the engine speed, and consequently the vehicle speed) will simply result in an increase of the brake rotor speed which is coupled to the third coupling, the flywheel and the machine 60 (coupled to the first coupling) keeping their respective previous speeds. Therefore no power is transferred to or from the electrical network 50 and no power is transferred to or from the flywheel 38. No torque is transmitted through the power split device 34, and the engine 12 provides all the energy to drive the driven unit.

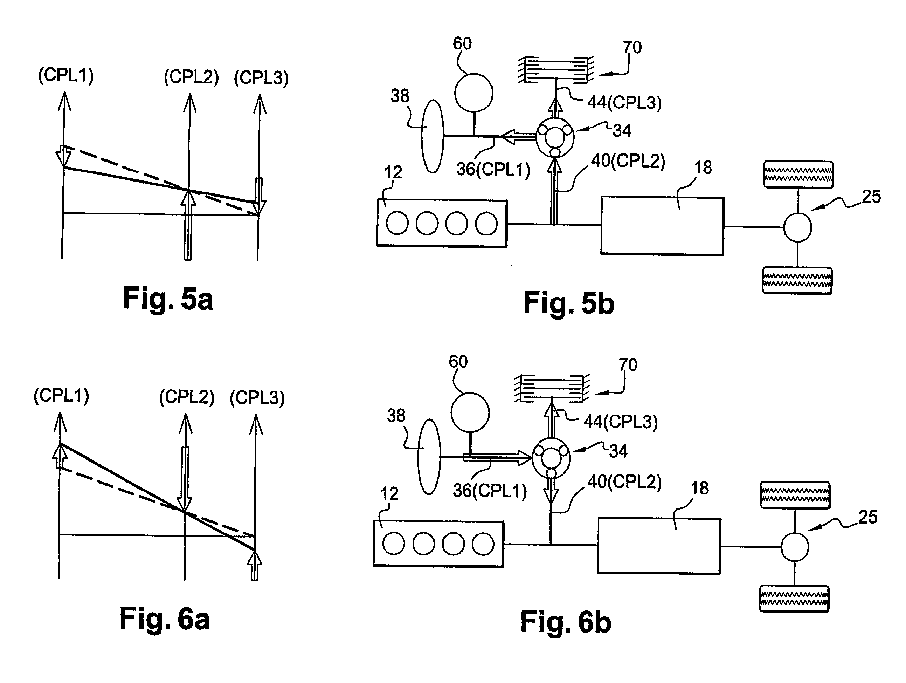

On Figure 5a is shown a case where regenerative braking is occurring. This is shown on the simplified functional diagrams of Figure 5b (which corresponds to the lever diagram of Figure 5a) where it is represented by an arrow that the main driveline is able to contribute power to the power split device 34. This power decelerates the vehicle without, or in addition to the use of the vehicle service brakes. We will use the convention according to which the torque applied by the main driveline to the power split device 34 in such a case is positive, represented by an upward arrow on the lever diagram. On Figure 5b is represented the corresponding power flux in the system. In such a case, the brake 70 can be controlled in order to force the power split device 34 to send some power through its first input/output to the flywheel 38 and to the machine 60 so as to increase their rotating speed, thereby transforming this transferred power into energy stored in mechanical form in the flywheel, and possibly in electrical form if the machine 60 is reversible and is operated as a generator. Therefore, as can be seen on Figure 5a, the brake 70 can be controlled to exert a certain torque on the power split device 34 which, according to the above convention, is negative (see Figure 5a). By doing so, a negative torque is applied by the flywheel 38 and possibly by the reversible machine 60 on the power split device 34, which means that, inversely, a positive torque is applied by the power split device 34 to the flywheel 38 and the reversible machine 60. Thereby, assuming that the flywheel 38 is initially rotating in the positive direction, it means that the flywheel will accelerate and indeed store some additional energy recovered from the main driveline.

Moreover, the brake is adapted to start up the flywheel when it is discharged, especially if machine 60 is not reversible and is of the generator or pump type, by transferring power from the driveline, that is either from the engine or from the driven unit.

As can be seen, when the machine 60 is operated as a generator, the energy recovery system operates at the same time mechanically and electrically and the recovered energy is thus transferred and stored or used through two forms, both mechanically and electrically.

To get the energy from the flywheel 38, the latter must be decelerated by applying a resistant torque on its shaft, whereby inversely, the flywheel 38 will apply a motoring torque on the power split device's first input/output 36. As above, this can be achieved by proper control of the brake 70.

Such a case is shown on the simplified functional diagram of Figure 6b (which corresponds to the lever diagram of Figure 6a) where it is represented by an arrow that the flywheel 38 is able to contribute power to the power split device 34. This torque is the counterpart of the flywheel deceleration. We use the convention according to which the torque applied by the flywheel 38 to the power split device 34 in such a case is positive, represented by an upward arrow on the lever diagrams. Of course, the aim is to have at least part of the energy provided by the flywheel 38 be sent to the vehicle wheels. Therefore, as can be seen on Figure 6a, the brake 70 needs to be controlled to exert a certain torque on the power split device 34 which, according to the above convention, is positive. By doing so, a negative torque is applied by the main driveline on the power split device 34, which means that, inversely, a positive torque is applied by the power split device 34 to the driveline. Thereby, assuming that the main driveline is initially rotating in the positive direction, it means that the main driveline will tend to accelerate and indeed benefit from some recovered energy.

Therefore, the torque supplied by the flywheel to the driveline through proper control of the brake can enable to boost the vehicle either on its own, when the vehicle is running in flywheel mode, or as complement to the driving power deliver by the ICE.

The torque supplied by the flywheel to the driveline through proper control of the brake can also enable to start the ICE either when the vehicle is at stand still or when the vehicle is running in flywheel mode. When starting the ICE when the vehicle is at stand still, the first clutch 20 can be closed without energy loss (the second coupling will be stopped as long as no torque is applied on the brake). The second clutch 22 would then be open. Applying torque with the brake 70 will cause the energy stored in the flywheel to flow to the second input/output coupling and will start the ICE. The energy loss in the brake 70 is compensated by avoiding the energy loss that usually occurs in the first clutch 20 when connecting the ICE to the gearbox. When starting the ICE and synchronizing its speed to that of the gearbox input, when vehicle is running in flywheel mode, the torque supplied by the brake avoids torque loss on the driven unit. This improves the driving comfort.

In the second functional embodiment of the invention which is shown on Figure 2, it can be seen that the power split transmission device 34 has four input/output couplings, the speed of all said four separate couplings being interdependent but not being with a fixed ratio one to the other. Basically, the speed of two of the input/outputs is known when the speeds of the other two input/outputs are determined.

In the present case, it can be seen that the first, second and third input/output couplings of the power split transmission device are respectively connected as in the first embodiment above:
- a first input/output coupling 36 of the four way power split transmission device 34 is mechanically coupled to the flywheel 38 and is coupled also to the machine 60;
- a second input/output 40 is mechanically coupled to the driveline, in this case to engine 12 and to the input shaft 16 of the gearbox 18;
- and a third input/output coupling 44 is mechanically coupled to a friction brake 70 adapted to control the torque applied on said third coupling and said third coupling is not connected to an electric machine.

The fourth input/output coupling 74 is connected to a second friction brake 76.

This power split transmission having four input/outputs can take the form of a complex planetary gear, which itself can comprise for example:
- two single planetary gear sets that have two couplings mechanically linked (tandem or compound planetary gears);
- a complex planetary gear set that has 2 branches (like Ravigneaux, Simpson, Lepelletier complex gear trains);
- two separate planetary gear sets that have both a coupling connected to the flywheel.

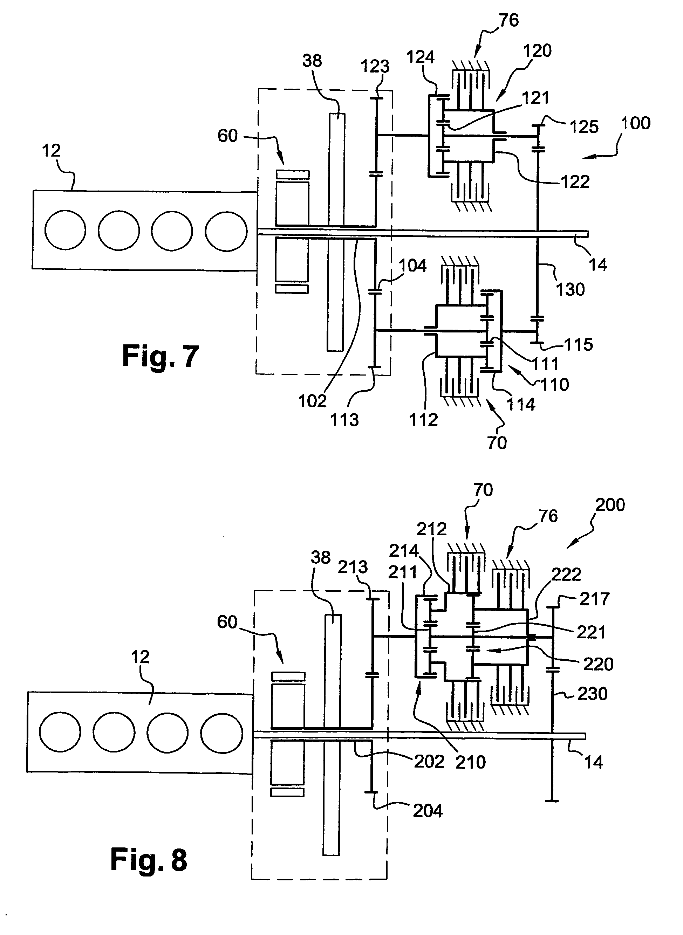

Figures 7 to 11 show very schematically how the energy recovery system can be structurally integrated in the powertrain according to the second functional embodiment of the invention. On those figures, clutches 20, 22, 72 are omitted so that what is described as the output shaft of the engine shall considered as one of the output shaft of the engine or of the input shaft of the gearbox or of the intermediate shaft described above, or any element of the driveline.

On Figure 7 is shown one possible structural embodiment of the second functional embodiment of Figure 2. In this embodiment 100, one can see that the machine 60 and the flywheel 38 are mounted on a common rotating body 102 which is coaxial with the engine 12 output shaft 14 and which is equipped with a gearwheel 104. The common rotating body 102 and its gearwheel 104 are free to rotate with respect to output shaft 14. The brakes 70, 76 are each associated with a respective planetary gear 110, 120. The rotor of the first brake 70 is connected to the carrier 112 of its respective gear 110. The sun wheel 111 of the first gear 110 is meshed via a gearwheel 113 to the gearwheel 104 of the rotating body 102. The ring gear 114 of gear 110 is meshed via a gearwheel 115 to an output gearwheel 130 which is mounted coaxially on the output shaft 14 of the engine, fast in rotation with said output shaft 14. The rotor of second brake 76 is also connected to the carrier 122 of its respective gear. The ring gear 124 of second gear 120 is meshed via a gearwheel 123 to the gearwheel 104 of the rotating body 102. The sun gear 121 of second gear 120 is meshed via a gearwheel 125 to the output gearwheel 130. The output gearwheel 130 corresponds to the second input/output, while the carriers 114 and 124 are respectively the third and fourth input/output couplings of the power split transmission device.

On Figure 8 is shown a second possible structural embodiment of the functional embodiment of Figure 2. In this embodiment 200, one can see that the machine 60 and the flywheel 38 are mounted on a common rotating body 202 which is coaxial with the engine 12 output shaft 14 and which is equipped with a gearwheel 204. The common rotating body 202 and its gearwheel 204 are free to rotate with respect to output shaft 14. The brakes 70, 76 are each associated with a respective first and second planetary gear 210, 220. The rotors of each brake 70, 76 is connected to the carrier 212, 222 of its respective gear. The ring gear 214 of the first gear 210 is meshed via a gearwheel 213 to the gearwheel 204 of the rotating body 202. The carrier 212 of the first gear 210 is fast in rotation with the ring gear of the second gear 220. Also the sun gears 211 and 221 of the two gears are fast in rotation together and are fast in rotation with a gearwheel 217. Said gearwheel 217 is meshed to an output gearwheel 230 which is mounted coaxially on the output shaft 14 of the engine, fast in rotation with said output shaft 14. In this embodiment, the two gears 210, 220 are mounted in series. The first, second, third and fourth couplings of the power split transmission device are respectively the rotating body 202, the gearwheel 217, the carrier 212 of the first gear 210, and the carrier 222 of the second gear 220.

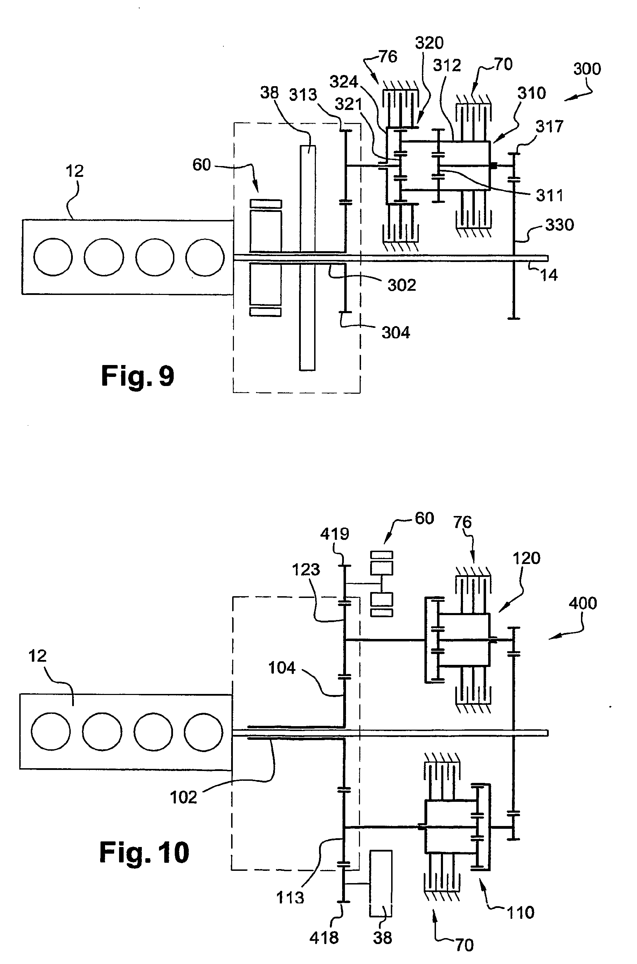

On Figure 9 is shown a third possible structural embodiment of the functional embodiment of Figure 2. In this embodiment 300, one can see that the machine 60 and the flywheel 38 are mounted on a common rotating body 302 which is coaxial with the engine 12 output shaft 14 and which is equipped with a gearwheel 304. The common rotating body 302 and its gearwheel 304 are free to rotate with respect to output shaft 14. The brakes 70, 76 are each associated with a respective first and second planetary gear 310, 320. The planetary gears 310, 320 are here combined as in a Ravigneaux gear train. The second brake 76 is connected to the ring gear 324 of the second planetary gear 320 whose sun gear 321 is connected via a gearwheel 313 to the gearwheel 304 of the rotating body 302. The first gear 310 does not have a ring gear but it has a planet carrier 312 which is shared with the second gear 320. In other words, the planet gears of the first gear and of the second gear are mounted on the same planet carrier. Although not shown on the figure, the planet gears of both gears 310, 320 can be connected so as to have the same rotation speed around their respective axis with respect to the common planet carrier. Also, this common planet carrier 312 is connected to the rotor of the first friction brake 70. The sun gear 311 of the first gear is connected via a gearwheel 317 to a gear wheel 330 which is mounted coaxially on the output shaft 14 of the engine, fast in rotation with said output shaft 14.

On Figure 10 is shown a fourth possible structural embodiment of the functional embodiment of Figure 2. This embodiment 400 is very similar to the embodiment 100 described above as it uses the same power split transmission, for which the same numeral references will be used. Nevertheless one can see that the reversible machine 60 and the flywheel 38 are integrated differently. The flywheel 38 is connected via a gearwheel 418 to the said gearwheel 113, although its gearwheel 418 could alternatively be meshed with the gearwheel 123 which is associated to the second planetary gear 120, or could alternatively be meshed directly with the gearwheel 104 of the rotating body 102. The machine 60 is connected via a gearwheel 419 to the said gearwheel 123, although its gearwheel 419 could alternatively be meshed with the gearwheel 113 which is associated to the first planetary gear 110, or could alternatively be meshed directly with the gearwheel 104 of the rotating body. The machine 60 and the flywheel (or at least one of them, as the other could retain the same location as in the embodiment of Figure 7) are therefore mounted in a non co-axial manner with the engine output shaft 14.

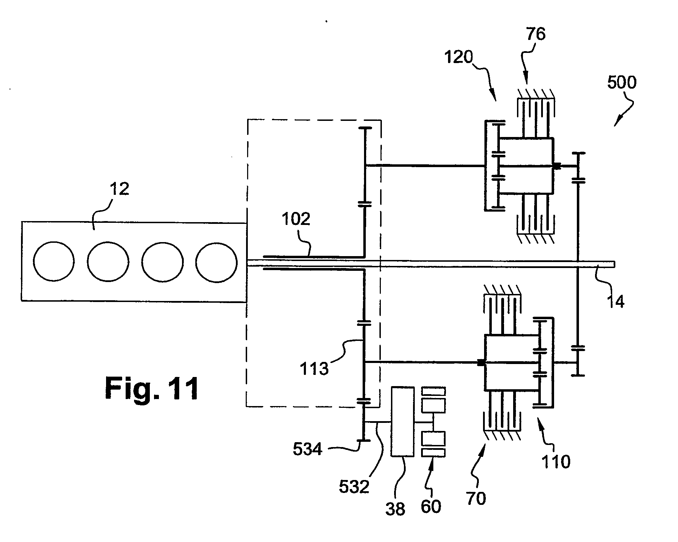

On figure 11 is shown a fifth possible structural embodiment of the functional embodiment of Figure 2. This embodiment 500 is very similar to the embodiment 100 described above as it uses the same power split transmission, for which the same numeral references will be used. Nevertheless one can see that the reversible machine 60 and the flywheel 38 are integrated differently. Indeed, instead of being mounted on the rotating body 102, the flywheel 38 and the rotor of the reversible machine 60 are jointly mounted on a shaft 532 which extends in parallel to the engine output shaft 14 and which carries a gearwheel 534 which meshes with the gearwheel 104 of the rotating body 102, either directly, or, as is the case in the shown embodiment, by being connected to the gearwheel 113 which is associated to the first planetary gear 110.

The different integration of the flywheel and/or of the machine 60 which are described in relation to embodiments 400 and 500 could also be applied to the embodiments 200 and 300.

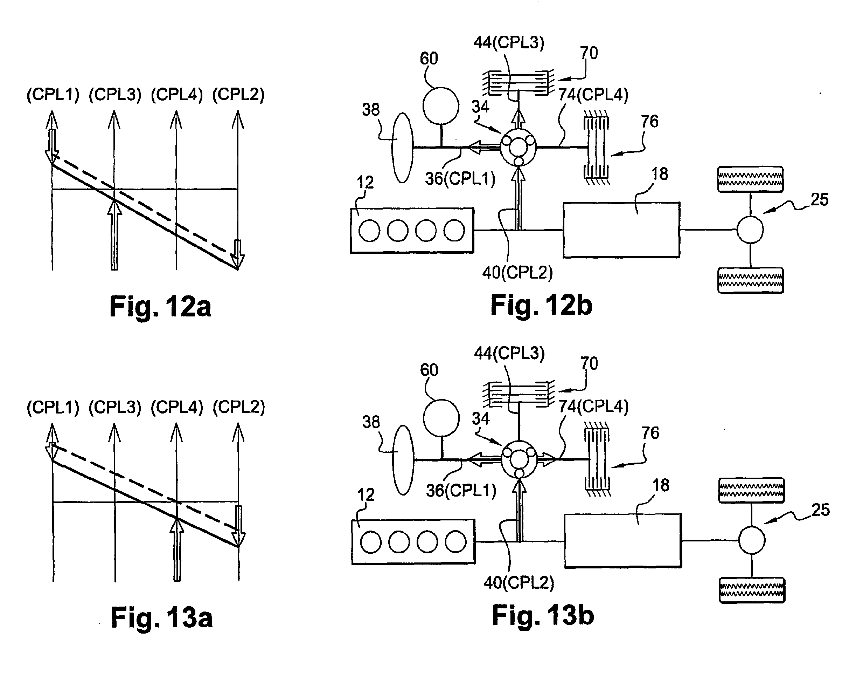

Figures 12a, 12b, 13a, 13b are similar to figures 5a to 6b described above, but in relation to the second functional embodiment as described above. It has to be noted that these figures apply to any of the structural embodiments 100 to 500 of this second functional embodiment. The lever diagrams of figures 12a and 13a for a four-way power split device are elaborated similarly to the lever diagrams of figures 5a and 6a for a three-way power split diagram.

Figures 12a to 13b show two cases of "recharging" of the flywheel 38 by the driveline through the four-way power split device.

In the case of figures 12a and 12b, it is presumed that the flywheel has a relatively low initial speed while the driveline, or more exactly the second coupling CPL2, has a relatively high speed. This can represent the case where the vehicle is driving at a relatively high speed and is initiating a decelerating sequence. In such a case, the brake 70 can be controlled in order to provide a resisting torque on the third coupling CPL3 that will cause some driving torque to be transferred to the flywheel through the first coupling CPL1. The flywheel is therefore accelerated, thus storing energy. Also, the machine 60 can be used to transform the kinetic energy into electric or fluidic power. The second brake 76 is simply let free of any friction and no power is therefore transferred through the fourth coupling CPL4.

In the case of Figure 13a and 13b, the same kind of power transfers is achieved, but through the use of the braking power of the second brake 76, while the first brake 70 is free of friction.

Thanks to the provision of two brakes which are coupled to two different inputs of the power split device, the range of operation of the system is extended because, in the configuration of Figure 13a, the first brake could not be used to cause a transfer of power from the driveline to the flywheel. Indeed, the relative speeds of the first and third couplings would not allow that. Also, in the configuration of Figure 12a, where any of the two brakes could be used to transfer some power from the driveline to the flywheel, there is a clear advantage is using predominantly or exclusively the brake which, at a given moment, has the slowest speed. Indeed, for a same torque transfer thus achieved in the power split device, the power consumed in the brake is less if the speed of brake generating the braking torque is lower. Also, in cases such as those of Figure 13a where both brakes can be used, it is possible to operate both brakes simultaneously to input a big braking torque on the third and fourth couplings, thereby transferring a big amount of torque from the driveline to the flywheel.

On Figure 3 is shown a third functional embodiment of the invention which is very similar to the second functional embodiment, except that a second electrical or fluidic machine 78 is provided which is mechanically coupled to the second brake 76 (or in other words with the fourth input/output 74 of the power split device 34), either directly or through a mechanical transmission with a constant ratio. The second machine 78 can be reversible or not. Preferably, it is operable in both rotating directions of the fourth coupling. In this embodiment, the machine 60 is reversible and is operable as a motor or a generator in its both rotating directions. The second machine 78 (in this embodiment electrical, so as to be matched with the first reversible machine) is also reversible and is operable as a motor or a generator in its both rotating directions, and it is preferably electrically connected to the electrical network 50, so that it can draw or provide electrical current from/to the network, depending on whether it is operated as a motor or a generator. Therefore, the second electrical machine 78 can draw current from the electrical storage unit 52 (or from the reversible machine 60 when the latter is used as a generator) to provide driving torque to the fourth input/output coupling 74 of the power split transmission 34. Conversely, the second electrical machine 78 can also be operated as a generator and provide a resistive torque to the fourth input/output coupling 74 of the power split transmission 34, in place of or in addition to the second brake 76. In fact, in this embodiment, the second friction brake 76 could be simply eliminated because it can be functionally replaced by the second reversible machine 78. Another possible combination would be to have the second machine being only of the motor type, to provide the driving torque, while the brake 76 would provide the resistive torque.

As in the second embodiment, the second electric machine 78 can be used to transfer energy from one storage means to the other, in order to manage their state of charge independently. If the reversible machine 60 is hydraulic, then the second machine 78 would also be hydraulic.

The balance between the recovered electric energy and the electric energy needed to supply both the power split device and the electrical network can be tuned by choosing appropriate planetary gear ratios. This energy balance can be further tuned by the gearshift strategy. For instance, in case of an automatic or automated gearbox, speeds upstream of the gearbox can be increased during braking and lowered during vehicle take-off in order to maximize energy recovery.

It must be noted that, in the third embodiment of the invention, even when two reversible machines are connected respectively to the first and fourth couplings of the power split device, the system could operate without the presence of any storage 52, since one machine operating as a generator or pump can provide the power to the other machine operating as a motor.

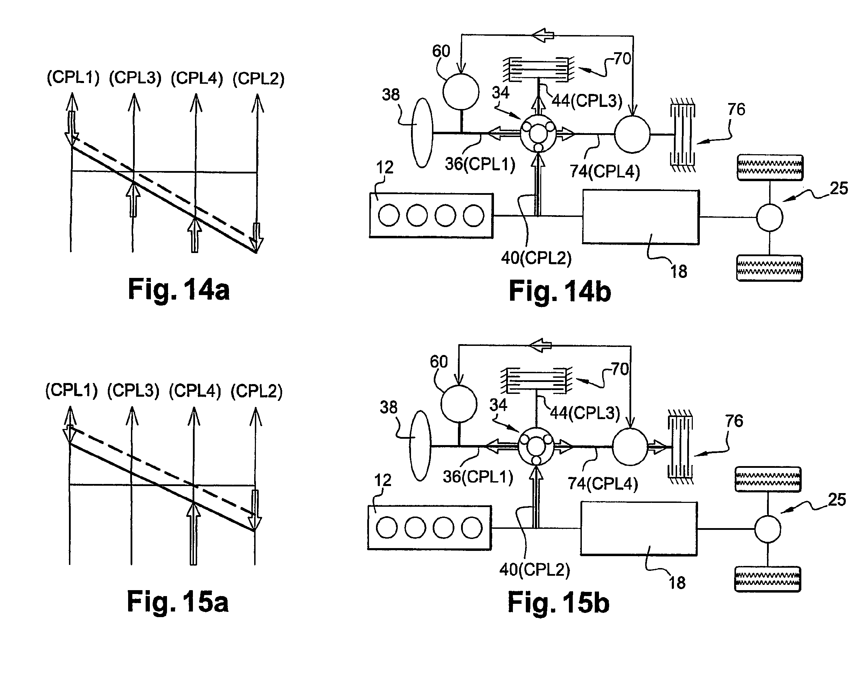

Figures 14a, 14b, through 16a, 16b are similar to Figures 12a and 12b described above, but in relation to the third functional embodiment as described above. These Figures show three cases of "recharging" of the flywheel 38 by the driveline through the four-way power split device in the third embodiment of the invention, depending on the initial speed of the flywheel.

In the case of Figures 14a and 14b, corresponding to a relatively slow speed of the flywheel, the resistive torque required on the power split device to transfer power from the driveline to the flywheel is given by both the first brake 70 and by the second machine 78 operated as a generator. This has the advantage that the actions of these two components are combined, so that a big resistive torque can be provided without over sizing neither the brake 70 nor the second machine 78. This is all the more true because the second brake 76, if present in the implementation, can also be used to generate even more resistive torque. Thanks to the second machine 78, part of the resistive torque is not wasted in the brake(s), but transformed into electricity which can be used to operate the first machine 60 as a motor, thereby providing additional torque to the flywheel. Through the two reversible machines, an electrical pathway of power is created to transfer power from the driveline to the flywheel. This is even more visible in the use case of Figures 15a and 15b corresponding to an average speed of the flywheel. Here, the brake 70 cannot be used to transfer power from the driveline to the flywheel, due to the relative speeds of the input/output couplings. Therefore, only the fourth coupling 74 (CPL4) is provided with resistive torque, preferably by the second machine operated as a generator, but also, by the second brake 76 if it is present. In these two configurations the electricity generated by the second machine 78 can be used by the first reversible machine operated as a motor to have additional power supplied to the flywheel through the electrical pathway. This electricity could also or alternatively be provided to the electrical network to be stored in an energy accumulator, if such accumulator is present.

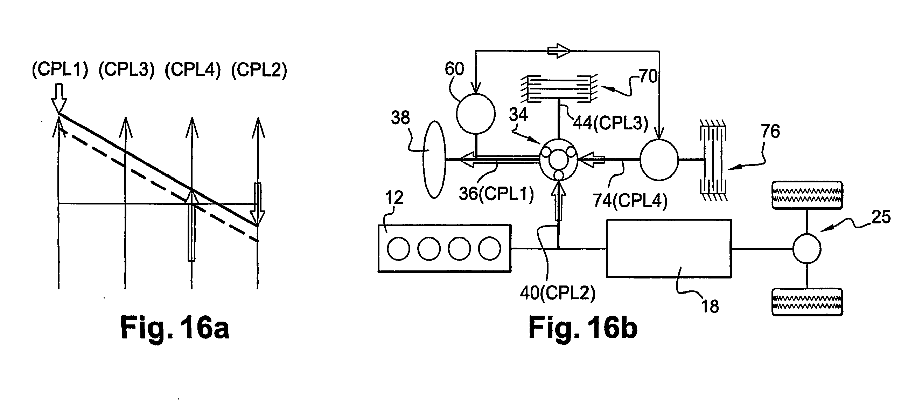

In Figures 16a and 16b is shown the case where, due to the relative speeds of the input/output couplings of the power split device (which are essentially dependent upon the speed of the engine/driveline and of the flywheel), the transfer of power from the driveline to the flywheel can only be possible if a driving torque is applied to one of the third or fourth couplings. In such a case, only the second machine 78, operated as a motor, can provide such torque. This clearly shows that having the second machine 78 allows to further extending the operability of the energy recovery device as a whole, i.e. over a wider range of operating conditions of the powertrain. The electricity necessary to operate the second machine 78 as a motor can, at least to a certain extent, be provided by the first machine 60 operated as a generator. In such a case, part of the power provided to the first coupling 36 (CPL1) is not provided to the flywheel but is re-circulated through the second machine 78. Of course, if the second machine is connected to a network having an energy accumulator, the electricity necessary to run the machine as a motor can be at least in part provided by the said accumulator.

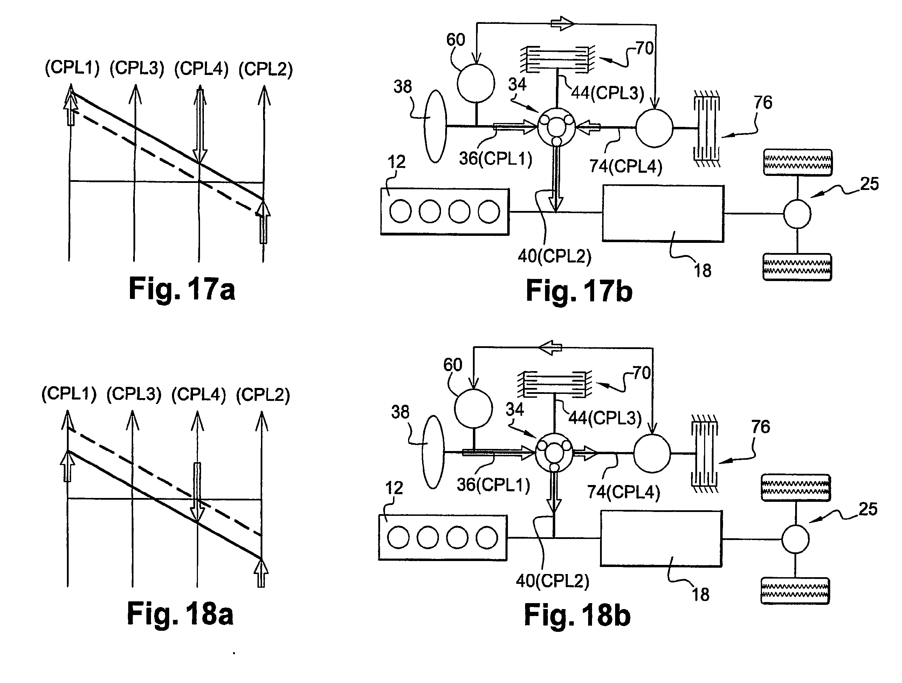

Figures 17a, 17b, and 18a, 18b show two cases of "discharging" the energy accumulated in the flywheel 38 towards the driveline through the four-way power split device in the third embodiment of the invention, depending on the initial speed of the flywheel. It both cases, the first brake 70 is not used for the discharging of the flywheel.

In the case of Figures 17a and 17b, corresponding to a relatively high initial speed of the flywheel, a driving torque needs to be applied to the fourth coupling 74 (CPL4) by the second machine 78 operating as a motor. As above, the electricity necessary to operate the second machine 78 as a motor can, at least to a certain extent, be provided by the first machine 60 operated as a generator, and/or can be at least in part provided by an accumulator if present.

In the case of Figures 18a and 18b, corresponding to a relatively low initial speed of the flywheel, a resistive torque needs to be applied to the fourth coupling 74 (CPL4) by the second machine 78 operating as a motor and/or by the second brake 76 if present.

Here above are described several possible modes of operation of the third embodiment of the invention, but further modes could be used, depending on the operating conditions of the system as a whole, these modes being obtained as a combination of the above described modes.

Any of the above described embodiments could be provided with an additional electric machine (not shown) which would be mechanically coupled to the driveline, for example to the engine output shaft 14 (or in other words with the gearbox input shaft 16), through a mechanical transmission with a constant ratio. This additional electrical machine would essentially be a traction motor forming, together with the engine 12, a hybrid parallel traction power unit where both the engine and the motor are able to drive the vehicle, either together or independently. The additional electrical machine would be electrically coupled to the electrical network 50, so that it can draw or provide electrical current from/to the network. Therefore, the additional electrical machine 50 could draw current from the electrical storage unit 52 or from another of the electric machines when the latter is used as a generator. Conversely, the additional electrical machine could also be operated as a generator and provide current to be stored in the electrical storage unit 52 or to be used in the reversible machine 60 when it operates as a motor.

In all the cases above, it is optimum to have the power split device 34 which is coupled to the main driveline "upstream" of the variable ratio transmission device 18. In other word, it is optimum to have a variable ratio transmission device between the second coupling of the power split device and the driven unit (the drive wheels in the case of a truck). Indeed, such a transmission device 18 is used to multiply the torque available for the driven unit for a given power output of the engine, simply by decreasing the rotation speed. Therefore, in general, the torque values which will transit through the power split device 34 will be lower if the latter is coupled "upstream" of the gearbox rather than downstream. This in itself allows using smaller, lighter and cheaper components for the power split device.

Also, the power split device being coupled upstream of the gearbox 18, its second input/output 40 is maintained with a speed range which is not too extended. Indeed, if the engine is a diesel engine for a commercial truck, the engine will operate approximately between 600 and 2400 rpms, which represents a factor of 4 between the minimum and the maximum speed. Downstream of the gearbox 18, such a factor would be much greater. Therefore, a major benefit I of having power split device upstream of the gearbox 18, is to operate at all times the brake(s) 70, 76, and the optional second machine 78 near their best efficiency.

## Claims

1. Powertrain for a vehicle comprising:
- a thermal engine for driving a driveline of the vehicle;
- a power split transmission device (34) comprising at least three separate input/output couplings (36, 40, 44), the speed of all said at least three separate couplings being interdependent but not being with a fixed ratio one to the other;
wherein:
- a first coupling (36) of said power split transmission device (34) is coupled to a flywheel (38) and to a fist fluidic or electric machine (60);
- a second coupling (40) of said power split transmission device (34) is coupled to the driveline of the vehicle ;
- a third input/output coupling (44) of the power split transmission device (34) is coupled to a friction brake (70) adapted to control the torque applied on said third coupling (44) and said third coupling (44) is not connected to an electric machine ;
**characterized in that**
- the friction brake (70) is controlled to create a controlled amount of friction, including at least one intermediate value of friction between and distinct from a no friction state and a full friction state in order to have at least part of the energy provided by the flywheel (38) that is sent to the driveline of the vehicle or in order to force the power split transmission device (34) to send some power through its first coupling (36) to the flywheel (38).

2. Powertrain according to claim 1, **characterized in that** the first fluidic or electric machine (60) coupled to the first coupling is connected to a fluidic or electric accumulator (52).

3. Powertrain according to claims 1 or 2, **characterized in that** the power split transmission device (34) has a fourth separate coupling (74) which is coupled to a second friction brake (76) and/or to a second fluidic or electric machine (78).

4. Powertrain according to claim 3, **characterized in that** the fourth separate coupling (74) is at least coupled to the second fluidic or electric machine (78) and second the fluidic or electric machine (78) is connected to a fluidic or electric accumulator (52).

5. Powertrain according to claim 3 or 4, **characterized in that** the fourth separate coupling (74) is at least coupled to the second machine (78) and the second machine (78) is reversible.

6. Powertrain according to one of claims 3 to 5, **characterized in that** the fourth separate coupling (74) is coupled to the second friction brake (76) and to the second machine (78) and **in that** the second machine (78) and the second brake (76) have a fixed speed ratio one to the other.

7. Powertrain according to any previous claim, **characterized in that** the flywheel (38) and the first machine (60) which are connected to the first coupling (36) have a fixed speed ratio one to the other.

8. Powertrain according to any previous claim, **characterized in that** the flywheel (38) is connected to the first coupling (36) via a clutch (72).

9. Powertrain according to any previous claim, **characterized in that** the second input/output coupling (40) of the power split transmission device (34) is mechanically coupled to the engine (12) and to an input shaft (16) of a variable ratio transmission device (18).

10. Powertrain according to any previous claim, **characterized in that** the second input/output coupling (40) of the power split transmission device (34) is mechanically coupled to the engine (12) via a clutch mechanism (20).

11. Powertrain according to any previous claim, **characterized in that** the second input/output coupling (40) of the power split transmission device (34) is mechanically coupled to the input shaft (16) of a variable ratio transmission device (18) via a clutch mechanism (22).

12. Powertrain according to any previous claim, **characterized in that** the powertrain is provided with an additional electric machine mechanically coupled to the driveline through a mechanical transmission with a constant ratio forming, together with the engine (12), a hybrid parallel traction power unit.

13. Powertrain according to any previous claim, **characterized in that** the first machine (60) coupled to the first coupling (36) is able to transform the rotating movement of the first coupling into another form of energy.

14. Powertrain according to any previous claim, **characterized in that** the first machine (60) coupled to the first coupling (36) is a reversible machine.

## Patentansprüche

1. Antriebsstrang für ein Fahrzeug mit
- einer Wärmekraftmaschine zum Antrieb eines Triebstrangs des Fahrzeugs,
- einer Antriebskraftverteilungsgetriebevorrichtung (34) mit wenigstens drei separaten Eingangs-/Ausgangskupplungen (36, 40, 44), wobei die Drehzahl aller der wenigstens drei separaten Kupplungen gegenseitig abhängig, jedoch nicht mit einem festen Verhältnis zueinander ist,
wobei
- eine erste Kupplung (36) der Antriebskraftverteilungsgetriebevorrichtung (34) mit einem Schwungrad (38) und einer ersten fluidischen oder elektrischen Maschine (60) gekoppelt ist,
- eine zweite Kupplung (40) der Antriebskraftverteilungsgetriebevorrichtung (34) mit dem Triebstrang des Fahrzeugs gekoppelt ist,
- eine dritte Eingangs-/Ausgangskupplung (44) der Antriebskraftverteilungsgetriebevorrichtung (34) mit einer Reibungsbremse (70) gekoppelt ist, die dazu ausgelegt ist, das auf die dritte Kupplung (44) ausgeübte Drehmoment zu steuern, und die dritte Kupplung (44) nicht mit einer elektrischen Maschine verbunden ist,
**dadurch gekennzeichnet, dass**
- die Reibungsbremse (70) zur Erzeugung einer gesteuerten Reibungsgröße gesteuert wird, einschließlich wenigstens eines Reibungszwischenwertes zwischen und unterschiedlich von einem Nicht-Reibungszustand und einem Voll-Reibungszustand, um wenigstens einen Teil der durch das Schwungrad (38) bereitgestellten Energie zu haben, die an den Triebstrang des Fahrzeugs übertragen wird, oder um die Antriebskraftverteilungsgetriebevorrichtung (34) dazu zu zwingen, einige Leistung durch ihre erste Kupplung (36) auf das Schwungrad (38) zu übertragen.

2. Antriebsstrang nach Anspruch 1, **dadurch gekennzeichnet, dass** die fluidische oder elektrische Maschine (60), die mit der ersten Kupplung gekoppelt ist, mit einem fluidischen oder elektrischen Akkumulator (52) verbunden ist.

3. Antriebsstrang nach Anspruch 1 oder 2, **dadurch gekennzeichnet, dass** die Antriebskraftverteilungsgetriebevorrichtung (34) eine vierte separate Kupplung (74) aufweist, die mit einer zweiten Reibungsbremse (76) und/oder einer zweiten fluidischen oder elektrischen Maschine (78) gekoppelt ist.

4. Antriebsstrang nach Anspruch 3, **dadurch gekennzeichnet, dass** die vierte separate Kupplung (74) wenigstens mit der zweiten fluidischen oder elektrischen Maschine (78) gekoppelt ist und die zweite fluidische oder elektrische Maschine (78) mit einem fluidischen oder elektrischen Akkumulator (52) verbunden ist.

5. Antriebsstrang nach Anspruch 3 oder 4, **dadurch gekennzeichnet, dass** die vierte separate Kupplung (74) wenigstens mit der zweiten Maschine (78) gekoppelt ist und die zweite Maschine (78) reversibel ist.

6. Antriebsstrang nach einem der Ansprüche 3 bis 5, **dadurch gekennzeichnet, dass** die vierte separate Kupplung (74) mit der zweiten Reibungsbremse (76) und der zweiten Maschine (78) gekoppelt ist und dass die zweite Maschine (78) und die zweite Bremse (76) ein festes Drehzahlverhältnis zueinander haben.

7. Antriebsstrang nach irgendeinem vorhergehenden Anspruch, **dadurch gekennzeichnet, dass** das Schwungrad (38) und die erste Maschine (60), die mit der ersten Kupplung (36) verbunden sind, ein festes Drehzahlverhältnis zueinander haben.

8. Antriebsstrang nach irgendeinem vorhergehenden Anspruch, **dadurch gekennzeichnet, dass** das Schwungrad (38) mit der ersten Kupplung (36) über eine Kupplung (72) verbunden ist.

9. Antriebsstrang nach irgendeinem vorhergehenden Anspruch, **dadurch gekennzeichnet, dass** die zweite Eingangs-/Ausgangskupplung (40) der Antriebskraftverteilungsgetriebevorrichtung (34) mechanisch mit der Maschine (12) und einer Eingangswelle (16) einer Getriebevorrichtung (18) mit variablem Verhältnis gekoppelt ist.

10. Antriebsstrang nach irgendeinem vorhergehenden Anspruch, **dadurch gekennzeichnet, dass** die zweite Eingangs-/Ausgangskupplung (40) der Antriebskraftverteilungsgetriebevorrichtung (34) mechanisch mit der Maschine (12) über einen Kupplungsmechanismus (20) gekoppelt ist.

11. Antriebsstrang nach irgendeinem vorhergehenden Anspruch, **dadurch gekennzeichnet, dass** die zweite Eingangs-/Ausgangskupplung (40) der Antriebskraftverteilungsgetriebevorrichtung (34) mechanisch mit der Eingangswelle (16) einer Getriebevorrichtung (18) mit variablem Verhältnis über einen Kupplungsmechanismus (22) verbunden ist.

12. Antriebsstrang nach irgendeinem vorhergehenden Anspruch, **dadurch gekennzeichnet, dass** der Antriebsstrang mit einer zusätzlichen elektrischen Maschine versehen ist, die mechanisch mit dem Triebstrang durch ein mechanisches Getriebe mit einem konstanten Verhältnis gekoppelt ist, wodurch zusammen mit der Maschine (12) eine Hybridantriebseinheit mit paralleler Traktion gebildet wird.

13. Antriebsstrang nach irgendeinem vorhergehenden Anspruch, **dadurch gekennzeichnet, dass** die mit der ersten Kupplung (36) gekoppelte erste Maschine (60) die Drehbewegung von der ersten Kupplung in eine andere Form von Energie umwandeln kann.

14. Antriebsstrang nach irgendeinem vorhergehenden Anspruch, **dadurch gekennzeichnet, dass** die mit der ersten Kupplung (36) gekoppelte erste Maschine (60) eine reversible Maschine ist.

## Revendications

1. Groupe motopropulseur pour un véhicule comprenant
- un moteur thermique pour entraîner une chaîne cinématique du véhicule ;
- un dispositif de transmission à division de puissance (34) comprenant au moins trois accouplements d'entrée/sortie (36, 40, 44), les vitesses de tous lesdits au moins trois accouplements séparés étant interdépendantes mais pas avec un rapport fixe les unes par rapport aux autres,
- un premier accouplement (36) dudit dispositif de transmission à division de puissance (34) étant accouplé à un volant d'inertie (38) et à une première machine fluidique ou électrique (60) ;
- un deuxième accouplement (40) dudit dispositif de transmission à division de puissance (34) étant accouplé à la chaîne cinématique du véhicule ;
- un troisième accouplement (44) d'entrée/sortie du dispositif de transmission à division de puissance (34) étant accouplé à un frein à friction (70) prévu pour réguler le couple appliqué audit troisième accouplement (44) et ledit troisième accouplement (44) n'étant pas connecté à une machine électrique ;
**caractérisé en ce que**
- le frein à friction (70) est commandé de manière à créer une quantité contrôlée de friction, incluant au moins une valeur de friction intermédiaire entre un état sans friction et un état de friction totale et distincte de ceux-ci, afin qu'au moins une partie de l'énergie fournie par le volant d'inertie (38) soit envoyée à la chaîne cinématique du véhicule ou afin de forcer le dispositif de transmission à division de puissance (34) à envoyer de la puissance à travers son premier accouplement (36) jusqu'au volant d'inertie (38).

2. Groupe motopropulseur selon la revendication 1, **caractérisé en ce que** la première machine fluidique ou électrique (60) accouplée au premier accouplement est connectée à un accumulateur fluidique ou électrique (52).

3. Groupe motopropulseur selon les revendications 1 ou 2, **caractérisé en ce que** le dispositif de transmission à division de puissance (34) présente un quatrième accouplement séparé (74) qui est accouplé à un deuxième frein à friction (76) et/ou à une deuxième machine fluidique ou électrique (78).

4. Groupe motopropulseur selon la revendication 3, **caractérisé en ce que** le quatrième accouplement séparé (74) est au moins accouplé à la deuxième machine fluidique ou électrique (78) et la deuxième machine fluidique ou électrique (78) est connectée à un accumulateur fluidique ou électrique (52).

5. Groupe motopropulseur selon la revendication 3 ou 4, **caractérisé en ce que** le quatrième accouplement séparé (74) est au moins accouplé à la deuxième machine (78) et la deuxième machine (78) est réversible.

6. Groupe motopropulseur selon l'une quelconque des revendications 3 à 5, **caractérisé en ce que** le quatrième accouplement séparé (74) est accouplé au deuxième frein à friction (76) et à la deuxième machine (78) et **en ce que** la deuxième machine (78) et le deuxième frein (76) ont un rapport de vitesse fixe l'un par rapport à l'autre.

7. Groupe motopropulseur selon l'une quelconque des revendications précédentes, **caractérisé en ce que** le volant d'inertie (38) et la première machine (60) qui sont connectés au premier accouplement (36) ont un rapport de vitesse fixe l'un par rapport à l'autre.

8. Groupe motopropulseur selon l'une quelconque des revendications précédentes, **caractérisé en ce que** le volant d'inertie (38) est connecté au premier accouplement (36) par le biais d'un embrayage (72).

9. Groupe motopropulseur selon l'une quelconque des revendications précédentes, **caractérisé en ce que** le deuxième accouplement d'entrée/sortie (40) du dispositif de transmission à division de puissance (34) est accouplé mécaniquement au moteur (12) et à un arbre d'entrée (16) d'un dispositif de transmission à rapport variable (18).

10. Groupe motopropulseur selon l'une quelconque des revendications précédentes, **caractérisé en ce que** le deuxième accouplement d'entrée/sortie (40) du dispositif de transmission à division de puissance (34) est accouplé mécaniquement au moteur (12) par le biais d'un mécanisme d'embrayage (20).

11. Groupe motopropulseur selon l'une quelconque des revendications précédentes, **caractérisé en ce que** le deuxième accouplement d'entrée/sortie (40) du dispositif de transmission à division de puissance (34) est accouplé mécaniquement à l'arbre d'entrée (16) d'un dispositif de transmission à rapport variable (18) par le biais d'un mécanisme d'embrayage (22).

12. Groupe motopropulseur selon l'une quelconque des revendications précédentes, **caractérisé en ce que** le groupe motopropulseur est pourvu d'une machine électrique supplémentaire accouplée mécaniquement à la chaîne cinématique par le biais d'une transmission mécanique à rapport constant, formant, conjointement avec le moteur (12), une unité de transmission à traction parallèle hybride.

13. Groupe motopropulseur selon l'une quelconque des revendications précédentes, **caractérisé en ce que** la première machine (60) accouplée au premier accouplement (36) est capable de transformer le mouvement de rotation du premier accouplement en une autre forme d'énergie.

14. Groupe motopropulseur selon l'une quelconque des revendications précédentes, **caractérisé en ce que** la première machine (60) accouplée au premier accouplement (36) est une machine réversible.
